# EUROPEAN PATENT APPLICATION

(11) **EP 4 299 310 A1**
(43) Date of publication of application: **03.01.2024**
(21) Application number: 21928108.6
(22) Date of filing: 21.12.2021
(51) Int. Cl.: B32B 27/00, B32B 27/20, B32B 27/30, C08F 290/06, C09D 11/101

(54) **ACTIVE-ENERGY-RAY-CURABLE OFFSET PRINTING INK COMPOSITION**

(30) Priority: 24.02.2021 JP 2021027651
(71) Applicant: Sakata INX Corp., Osaka-shi, Osaka 550-0002 (JP)
(72) Inventor: OMI, Naoki, Osaka-shi, Osaka 550-0002 (JP)
(74) Representative: Boco IP Oy Ab
(86) International application number: PCT/JP2021/047325
(87) International publication number: WO 2022/181015

(57) **Abstract**

Provided is an active energy ray-curable offset printing ink composition, comprising a colorant, a urethane acrylate resin having an acid value of 3 mgKOH/g or less, a metal chelating agent, and a polyfunctional photopolymerizable compound, wherein a content of the metal chelating agent is 0.1 to 10%, and wherein the active energy ray-curable offset printing ink composition is configured for forming a printing layer in a laminated body comprising a first base material, the printing layer provided on the first base material, and a second base material provided on the printing layer.

## Description

### TECHNICAL FIELD

The present invention relates to an active energy ray-curable offset printing ink composition. More particularly, the present invention relates to an active energy ray-curable offset printing ink composition capable of producing a laminated body having excellent lamination strengths.

### BACKGROUND ART

The active energy ray-curable printing ink composition is excellent in workability because it is instantaneously cured by irradiation with electron beams, ultraviolet rays, or the like. The active energy ray-curable printing ink composition has a low environmental load because it is used without a solvent. Therefore, as shown in Patent Documents 1 and 2, the active energy ray-curable printing ink composition has been used for printing on paper, plastic packaging materials, and the like. Furthermore, the active energy ray-curable printing ink composition has been used as a bag by being printed on a film and laminating the film on a plastic packaging material.

### PRIOR ART DOCUMENT

### Patent Document

Patent Document 1: WO 2019/017270
Patent Document 2: JP 2019-1090 A

### SUMMARY OF THE INVENTION

However, the ink compositions described in Patent Documents 1 and 2 do not provide sufficient lamination strengths (peel strength, seal strength) of a laminated body.

The present invention has been made in view of such conventional problems, and it is an object of the present invention to provide an active energy ray-curable offset printing ink composition capable of producing a laminated body having excellent lamination strengths.

The active energy ray-curable offset printing ink composition of the present invention for solving the above-described problems comprises a colorant, a urethane acrylate resin having an acid value of 3 mgKOH/g or less, a metal chelating agent, and a polyfunctional photopolymerizable compound, wherein a content of the metal chelating agent is 0.1 to 10%, and wherein the active energy ray-curable offset printing ink composition is configured for forming a printing layer in a laminated body comprising a first base material, the printing layer provided on the first base material, and a second base material provided on the printing layer.

Moreover, the laminated body of the present invention for solving the above-described problems comprises a printing layer to which the above-described active energy ray-curable offset printing ink composition is applied, wherein the printing layer is provided on a first base material, and wherein a second base material is provided on the printing layer.

### EMBODIMENT FOR CARRYING OUT THE INVENTION

### <Active energy ray-curable offset printing ink composition>

The active energy ray-curable offset printing ink composition (hereinafter also referred to as an ink composition) of one embodiment of the present invention comprises a colorant, a urethane acrylate resin having an acid value of 3 mgKOH/g or less, a metal chelating agent, and a polyfunctional photopolymerizable compound. The content of the metal chelating agent is 0.1 to 10%. The ink composition is configured for forming a printing layer in a laminated body comprising a first base material, a printing layer provided on the first base material, and a second base material provided on the printing layer. Each component will be described below.

### <Colorant>

The colorant is an organic pigment, an inorganic pigment, or the like for applying a coloring power to the ink composition. Besides, in the present embodiment, the colorant includes a white pigment for making the ink composition white, a metal powder pigment for applying a metallic color such as gold and silver, an inorganic pigment for applying a pearly color, and the like.

By way of an example, the colorant is a yellow pigment such as disazo yellow (Pigment Yellow 12, Pigment Yellow 13, Pigment Yellow 17, and Pigment Yellow 1) and Hansa Yellow, a magenta pigment such as Brilliant Carmine 6B, Lake Red C, and Watching Red, a cyan pigment such as phthalocyanine blue, phthalocyanine green, and alkali blue, a black pigment such as carbon black, a fluorescent pigment, a white pigment such as titanium oxide, gold powder, bronze powder, aluminum paste made from aluminum powder, mica powder, or the like.

A content of the colorant is not particularly limited. By way of an example, the content of the colorant is preferably 10% by mass or more in the ink composition. Moreover, the content of the colorant is preferably 70% by mass or less in the ink composition. Besides, when preparing a yellow ink composition using a yellow pigment, a magenta ink composition using a magenta pigment, a cyan ink composition using a cyan pigment, and a black ink composition using a black pigment, a pigment of another color may be used in combination, or an ink composition of another color may be added, as a complementary color.

### (Urethane acrylate resin having acid value of 3 mgKOH/g or less)

The urethane acrylate resin having an acid value of 3 mgKOH/g or less is a urethane resin obtained by condensing an isocyanate group-containing monomer and a hydroxyl group-containing monomer to obtain an urethane resin, the terminal of which is then modified with an acrylic group or a methacrylic group. Among them, the urethane acrylate resin having an acid value of 3 mgKOH/g or less preferably includes an aliphatic urethane acrylate resin, and the urethane acrylate resin having an acid value of 3 mgKOH/g or less is preferably an urethane acrylate resin that does not have a difunctional acid group modified with an acrylic group or methacrylic group at both terminals thereof. As a result, the ink composition can suppress intake of water in the ink which is derived from the acid value and suppress an excessive emulsification rate, which reduces stain of a printed matter during printing. Moreover, suppressing the emulsification rate leads to suppressing of the ink film thickness of the printed matter. Suppression of the film thickness also leads to suppression of internal stress after curing of a coating film, which is therefore advantageous in that adhesiveness to the base material and lamination strengths are increased. Furthermore, since aluminum chelate reacts with a functional group that is an origin of the acid value, there is a concern that it may cause gelation and increase viscosity of the ink.

A mass average molecular weight of the urethane acrylate resin is preferably 10,000 or less, more preferably 5,000 or less, further preferably 2,500 or less. Moreover, the mass average molecular weight of the urethane acrylate resin is preferably 500 or more. When the mass average molecular weight of the urethane acrylate resin is within the above-described ranges, a molecular weight of a cured product after reaction is suppressed, and flexibility of the coating film is increased, so that adhesiveness to the base material and lamination strengths are increased by suppressing internal stress. The number of functional groups (acryloyl groups) of the urethane acrylate is preferably 2 to 6, more preferably 2 to 3.

A content of the urethane acrylate resin is not particularly limited. By way of an example, the content of the urethane acrylate resin is preferably 25% by mass or more, more preferably 10% by mass or more, in the ink composition. Moreover, the content of the urethane acrylate resin is preferably 55% by mass or less, more preferably 45% by mass or less. When the content of the urethane acrylate resin is within the above-described ranges, adhesiveness and lamination strengths are improved.

### (Metal chelating agent)

The metal chelating agent is not particularly limited. By way of an example, the metal chelating agent is an aluminum-based chelating agent, a titanium-based chelating agent, a zirconium-based chelating agent, or the like. Specifically, the metal chelating agent is an aluminum-based chelating agent such as aluminum triisopropoxide, aluminum tributoxide, aluminum dipropoxide monoacetylacetate, aluminum diisopropoxide monoethylacetoacetate, aluminum dibutoxide monoacetylacetate, and aluminum triacetylacetate; a titanium-based chelating agent such as tetraisopropoxytitanium, tetrabutoxytitanium, and dipropoxybis(acetylacetonato)titanium; a zirconium-based chelating agent such as tetrabutoxyzirconium, or the like.

A content of the metal chelating agent is 0.1% by mass or more, preferably 0.5% by mass or more, in the ink composition. Moreover, the content of the metal chelating agent may be 10% by mass or less, preferably 5% by mass or less, in the ink composition. When the content of the metal chelating agent is less than 0.1% by mass, the ink composition causes poor adhesiveness, poor lamination strength (for example, the ink coating film easily peels off from the base material), leakage of contents due to tensile strength falling below the standard required for practical use (withstand load of 1.0 N/15 mm or less), etc., and therefore the original purpose of packaging and maintaining the contents cannot be achieved. On the other hand, when the content of the metal chelating agent is greater than 10% by mass, the ink composition loses a compounding degree of freedom for compounding other raw materials constituting the ink, which easily causes poor printability, a decrease in color density due to insufficient pigment, and a defect in viscosity adjustment due to insufficient solvent (acrylic monomer) used for viscosity adjustment.

### (Polyfunctional photopolymerizable compound)

The polyfunctional photopolymerizable compound is not particularly limited. By way of an example, the polyfunctional photopolymerizable compound preferably comprises a polyfunctional (meth)acrylate having an alkylene oxide-derived skeleton. The polyfunctional (meth)acrylates having an alkylene oxide-derived skeleton is poly(meth)acrylate of an alkoxy-modified polyfunctional (meth)acrylate and polyalkylene glycol, or the like. When the polyfunctional (meth)acrylate having an alkylene oxide-derived skeleton is compounded as a polyfunctional photopolymerizable compound, the ink composition improves in adhesiveness to the base material and lamination strength.

The polyfunctional photopolymerizable compound is more preferably a poly(meth)acrylate monomer in which 3 to 30 moles of ethylene oxide and/or polyalkylene oxide are modified, further preferably one in which 6 to 21 moles of ethylene oxide and/or polyalkylene oxide are modified, further preferably one in which 6 to 15 moles of ethylene oxide and/or polyalkylene oxide are modified.

More specifically, the polyfunctional (meth)acrylate having an alkoxy-modified polyfunctional (meth)acrylate alkylene skeleton is di(meth)acrylate of ethylene oxide (4 mol) adduct of propylene glycol, di(meth)acrylate of ethylene oxide (3 mol) adduct of glycerin, tri(meth)acrylate of ethylene oxide (3 mol) adduct of glycerin, di(meth)acrylate of propylene oxide (3 mol) adduct of glycerin, di(meth)acrylate of ethylene oxide (3 mol) adduct of diglycerin, tri(meth)acrylate of ethylene oxide (3 mol) adduct of diglycerin, di(meth)acrylate of propylene oxide (3 mol) adduct of diglycerin, di(meth)acrylate of ethylene oxide (3 mol) adduct of trimethylolpropane, tri(meth)acrylate of ethylene oxide (3 mol) adduct of trimethylolpropane, di(meth)acrylate of propylene oxide (3 mol) adduct of trimethylolpropane, tri(meth)acrylate of propylene oxide (3 mol) adduct of trimethylolpropane, di(meth)acrylate of ethylene oxide (2 mol) adduct of pentaerythritol, tri(meth)acrylate of ethylene oxide (3 mol) adduct of pentaerythritol, tetra(meth)acrylate of ethylene oxide (4 mol) adduct of pentaerythritol, di(meth)acrylate of alkylene oxide (2 mol) adduct of bisphenol, di(meth)acrylate of alkylene oxide (4 mol) adduct of bisphenol, di(meth)acrylate of alkylene oxide (6 mol) adduct of bisphenol, or the like. Moreover, poly(meth)acrylate of polyalkylene glycol is (poly)polyethylene glycol di(meth)acrylates such as ethylene glycol di(meth)acrylate, diethylene glycol di(meth)acrylate, and triethylene glycol diacrylate, (poly)propylene glycol di(meth)acrylates such as propylene glycol di(meth)acrylate, and dipropylene glycol di(meth)acrylate, or the like. Among them, the polyfunctional (meth)acrylate having an alkylene oxide-derived skeleton preferably includes an alkylene oxide-modified trimethylolpropane triacrylate containing 3 to 30 alkylene oxide units, more preferably 6 to 30 alkylene oxide units, in a molecule. As a result, the ink composition improves in adhesiveness to the base material and lamination strength.

A content of the polyfunctional photopolymerizable compound is 10% by mass or more, preferably 20% by mass or more, in the ink composition. Moreover, the content of the polyfunctional photopolymerizable compound is 80% by mass or less, preferably 60% by mass or less, in the ink composition. When the content of the polyfunctional photopolymerizable compound is within the above-described ranges, the ink composition improves in adhesiveness to the base material and lamination strength.

### (Extender pigment)

The ink composition appropriately comprises an extender pigment in order to apply viscoelasticity to the ink composition, adjust fluidity, prevent misting, and the like.

The extender pigment is not particularly limited. By way of an example, the extender pigment is clay, talc, mica, kaolinite (kaolin), barium sulfate, magnesium sulfate, calcium carbonate, silicon oxide, aluminum oxide, bentonite, heavy calcium carbonate, barium carbonate, zirconia, alumina, or the like. The extender pigment may be in a form of a powder or in a form of a dispersion dispersed in an appropriate solvent. An average particle size of the extender pigment is preferably 0.001 to 100 µm, more preferably 0.01 to 50 µm, further preferably 0.05 to 5 µm. A BET specific surface area of the extender pigment is preferably 1 to 350 m²/g, more preferably 10 to 70 m²/g, further preferably 20 to 50 m²/g.

When an extender pigment is included, a content of the extender pigment is not particularly limited. By way of an example, the content of the extender pigment is preferably more than 0% by mass, more preferably 1% by mass or more, in the ink composition. Moreover, the content of the extender pigment is preferably 30% by mass or less, more preferably 15% by mass or less, in the ink composition. When the content of the extender pigment is within the above-described ranges, viscoelasticity and fluidity of the ink composition are easily adjusted, and misting is easily prevented.

### (Other photopolymerizable compounds)

In the ink composition of the present embodiment, photopolymerizable compounds other than the above-described photopolymerizable compounds may be used in combination as long as their performances are not deteriorated.

### · Monomer

A monofunctional monomer is alkyl acrylate such as methyl (meth)acrylate, ethyl (meth)acrylate, butyl (meth)acrylate, hexyl (meth)acrylate, octyl (meth)acrylate, and dodecyl (meth)acrylate, (meth)acrylic acid, (meth)acrylate of ethylene oxide adduct, (meth)acrylate of propylene oxide adduct, isobornyl (meth)acrylate, cyclohexyl (meth)acrylate, tricyclodecane monomethylol (meth)acrylate, 2-hydroxyethyl (meth)acrylate , 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-phenoxypropyl (meth)acrylate, 2-hydroxy-3-butoxypropyl (meth)acrylate, 2-hydroxy-3-methoxypropyl (meth)acrylate, diethylene glycol mono(meth)acrylate, triethylene glycol mono(meth)acrylate, polyethylene glycol mono(meth)acrylate, dipropylene glycol mono(meth)acrylate, polypropylene glycol mono(meth)acrylate, glycerin mono(meth)acrylate, acryloyloxyethyl phthalate, 2-(meth)acryloyloxyethyl-2-hydroxy ethyl phthalate, 2-(meth)acryloyloxypropyl phthalate, β-carboxyethyl (meth)acrylate, (meth)acrylic acid dimer, w-carboxypolycaprolactone mono(meth)acrylate, dimethylaminoethyl (meth)acrylate, diethylamino ethyl (meth)acrylate, N-vinylpyrrolidone, N-vinylformamide, (meth)acryloylmorpholine, vinylmethyloxaziridinone, or the like.

A bi- or higher functional monomer is a bifunctional monomer such as ethylene glycol di(meth)acrylate, propylene glycol di(meth)acrylate, butylene glycol di(meth)acrylate, pentyl glycol di(meth)acrylate, neopentyl glycol di(meth)acrylate, hydroxypivalic hydroxypivalate di(meth)acrylate, hydroxypivalic hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethylol octane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanedi(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-butyl-2-ethyl-1,3-propanediol di(meth)acrylate, 2,4-diethyl-1,5-pentanediol di(meth)acrylate tricyclodecanedimethylol di(meth)acrylate, tricyclodecanedimethylol dicaprolactonate di(meth)acrylate, bisphenol A tetraethylene oxide adduct di(meth)acrylate, bisphenol F tetraethylene oxide adduct di(meth)acrylate, bisphenol S tetraethylene oxide adduct di(meth)acrylate, hydrogenated bisphenol A tetraethylene oxide adduct di(meth)acrylate, hydrogenated bisphenol F tetraethylene oxide adduct di(meth)acrylate, hydrogenated bisphenol A di(meth)acrylate, hydrogenated bisphenol F di(meth)acrylate, bisphenol A tetraethylene oxide adduct dicaprolactonate di(meth)acrylate, and bisphenol F tetraethylene oxide adduct dicaprolactonate di(meth)acrylate; a trifunctional monomer such as glycerin tri(meth)acrylate, trimethylolpropane tricaprolactonate tri(meth)acrylate, trimethylolethane tri(meth)acrylate, trimethylolhexane tri(meth)acrylate, trimethyloloctane tri(meth)acrylate, and pentaerythritol tri(meth)acrylate; a tetra- or higher functional monomer such as trimethylolpropane tetra(meth)acrylate, pentaerythritol tetra(meth)acrylate, pentaerythritol tetracaprolactonate tetra(meth)acrylate, diglycerin tetra(meth)acrylate, ditrimethylolpropane tetra(meth)acrylate, ditrimethylolpropane tetracaprolactonate tetra(meth)acrylate, ditrimethylolethane tetra(meth)acrylate, ditrimethylolbutane tetra(meth)acrylate, ditrimethylolhexane tetra(meth)acrylate, ditrimethyloloctane tetra(meth)acrylate, dipentaerythritol penta(meth)acrylate, dipentaerythritol hexa(meth)acrylate, tripentaerythritol hexa(meth)acrylate, tripentaerythritol hepta(meth)acrylate, tripentaerythritol octa(meth)acrylate, and tripentaerythritol polyalkylene oxide hepta(meth)acrylate; or the like.

Moreover, as a kind of monomer, there is an epoxidized vegetable oil acrylate obtained by acryl-modifying an epoxidized vegetable oil. This is a compound obtained by ring-opening addition of (meth)acrylic acid to an epoxy group of an epoxidized vegetable oil obtained by epoxidizing a double bond of an unsaturated vegetable oil with an oxidizing agent such as peracetic acid and perbenzoic acid. The unsaturated vegetable oil refers to a triglyceride in which at least one fatty acid has at least one carbon-carbon unsaturated bond, examples of which include a hempseed oil, a linseed oil, a perilla oil, an oiticica oil, an olive oil, a cacao-seed oil, a kapok oil, a kaya oil, a mustard oil, an apricot kernel oil, a tung oil, a kukui oil, a walnut oil, a poppy oil, a sesame oil, a safflower oil, a radish seed oil, a soybean oil, a chaulmoogra oil, a camellia oil, a corn oil, a rapeseed oil, a nigger oil, a rice bran oil, a palm oil, a castor oil, a sunflower oil, a grape seed oil, an almond oil, a tall oil, a pine seed oil, a cottonseed oil, a coconut oil, a peanut oil, a dehydrated castor oil, and the like. Since this kind of monomer is derived from vegetable oils, it helps increase an amount of biomass components in the ink composition. Various kinds of epoxidized vegetable oil acrylates are commercially available and thus may be used.

### · Oligomer

An oligomer is also used for the purpose of applying appropriate viscosity and elasticity to the ink composition. The oligomer is an epoxy-modified (meth)acrylate, a rosin-modified epoxy acrylate, which are exemplified by an ester of a hydroxyl group and (meth)acrylic acid generated after ring-opening of an epoxy group contained in an epoxy compound such as an epoxy resin with an acid or base, for example, a polyester (meth)acrylate that is prepared from a polyhydric alcohol, a polycarboxylic acid, and an acrylic acid or methacrylic acid, has an ester bond in a main chain, and comprises an acryloyl group or methacryloyl group at the terminal thereof, a polyether-modified (meth)acrylate exemplified by an ester of a terminal hydroxyl group of an polyether compound and (meth)acrylic acid, or the like.

### (Other components)

In addition to the above-described components, other components may be added to the ink composition of the present embodiment, as necessary. Such other components are resin components, polymerization inhibitors, dispersants, salts such as phosphates, waxes such as polyethylene-based waxes, olefin-based waxes, and Fischer-Tropsch waxes, or the like.

The resin components are a variety of resins conventionally used for ink compositions for printing. The resin component is preferably one having compatibility with the above-described photopolymerizable compounds, more preferably a styrene-acrylic resin, an acrylic resin, an alkyd resin, a rosin-modified alkyd resin, a rosin-modified phenol resin, a rosin-modified maleic acid resin, a rosin-modified petroleum resin, a rosin ester resin, a petroleum resin-modified phenol resin, a vegetable oil-modified alkyd resin, a petroleum resin, a diallyl phthalate resin, and the like.

The polymerization inhibitor is preferably a phenol compound such as butylhydroxytoluene, tocopherol acetate, nitrosamine, benzotriazole, hindered amine, or the like, and more preferably butylhydroxytoluene. When a polymerization inhibitor is added to the ink composition, a polymerization reaction is difficult to progress during storage and thickening is easy to be suppressed, in the ink composition. A content of the polymerization inhibitor in the ink composition is about 0.01 to 1% by mass, as an example.

The dispersant is appropriately used for dispersing coloring components and extender pigments contained in the ink composition in favorable state. A variety of dispersants are commercially available, such as, for example, the DISPERBYK (Trade name) series manufactured by BYK Japan KK, and the like.

### (Method of curing printed matter)

The ink composition of the present embodiment can be made into a cured film by irradiating with active energy rays after being printed on the base material. Examples of the active energy rays include ionizing radiation such as ultraviolet rays, electron beams, α rays, β rays, and γ rays. Among them, the active energy rays are preferably electron beams and ultraviolet rays (UV) from the viewpoints of excellent curability and convenience, and more preferably electron beams that use no photopolymerization initiators from the viewpoint of an excellent environmental safety.

Specific energy sources or curing devices include, for example, germicidal lamps, ultraviolet fluorescent lamps, ultraviolet light-emitting diodes (UV-LEDs), carbon arcs, xenon lamps, high-pressure mercury lamps for copying, medium or high pressure mercury lamps, ultra-high pressure mercury lamps, electrodeless lamps, metal halide lamps, ultraviolet rays using natural light as a light source, or electron beams from scanning or curtain type electron beam accelerator, etc.

### (Photopolymerization initiator)

When ultraviolet rays or the like are used as active energy rays, the ink composition preferably comprises a photopolymerization initiator. The photopolymerization initiator is a component that generates radicals upon irradiation with active energy rays, and the generated radicals polymerize a compound having an ethylenically unsaturated bond to cure the ink composition.

The photopolymerization initiator is not particularly limited as long as it generates radicals when irradiated with active energy rays. By way of an example, the photopolymerization initiator is benzophenone, diethylthioxanthone, 2-methyl-1-(4-methylthio)phenyl-2-morpholinopropan-1 - one, 4-benzoyl-4'-methyldiphenylsulfide, 1-chloro-4-propoxythioxanthone, isopropylthioxanthone, 2-hydroxy-2-methyl-1-phenylpropan-1-one, 1-hydroxycyclohexyl phenylketone, bis-2,6-dimethoxybenzoyl-2,4,4-trimethylpentylphosphine oxide, 1-[4-(2-hydroxyethoxy)-phenyl]-2-hydroxy-2-methyl-1-propane-1-one, 2,2-dimethyl-2-hydroxyacetophenone, 2,2-dimethoxy-2-phenylacetophenone, 2,4,6-trimethylbenzyl-diphenylphosphine oxide, ethoxy(2,4,6-trimethylbenzoyl)phenylphosphine oxide, 2-benzyl-2-dimethylamino-1-(morpholinophenyl)-butane-1-one, or the like. Such photopolymerization initiators are commercially available, and can be obtained, for example, under Trade names of Irgacure 907, Irgacure 369, Irgacure 184, Irgacure 379, Irgacure 819, TPO, etc. from BASF, and under Trade names of DETX, etc. from Lamberti.

When the ink composition comprises a photopolymerization initiator, a content of the photopolymerization initiator is preferably 1% by mass or more, and more preferably 2% by mass or more, in the ink composition. Moreover, the content of the photopolymerization initiator is preferably 20% by mass or less, more preferably 15% by mass or less, and further preferably 13% by mass, in the ink composition. When the content of the photopolymerization initiator is within the above-described ranges, the ink composition can achieve both a sufficient curability and a good internal curability, and the cost can also be reduced.

### (Method of producing ink composition)

The ink composition of the present embodiment can be produced by a conventionally known method. For example, the ink composition is produced by mixing each component and then milling it with a bead mill, three-roll mill, or the like to disperse a colorant, followed by adding additives (a polymerization inhibitor, wax, etc.) as necessary, and further, adjusting the viscosity by adding the above-described monomer component. The viscosity of the ink composition preferably has a value of 5 to 70 Pa·s at 25°C measured by a Laray viscometer.

### (Method of printing ink composition and method of producing laminated body)

A laminated body can be produced by using the ink composition of the present embodiment. The laminated body of the present embodiment comprises a printing layer to which the ink composition is applied. The printing layer is provided on a first base material. Moreover, a second base material is also provided on the printing layer. In the laminated body, for example, an ink composition other than a white ink composition is printed on a base material film (first base material) such as various resin films and various high-performance barrier films by an offset printing method one or more times to form a colored ink layer (printing layer). Next, the white ink composition is optionally printed on the surface side of the colored ink layer (the lower layer side as viewed from the surface layer after the final lamination) by the offset printing method and cured by active energy rays to obtain a printed matter. A resin film or the like (second base material) is laminated on the layer side of the white ink composition of the obtained printed matter or on the surface side of the single-color ink layer by various laminate processing methods to obtain a laminated body for packaging bag or the like. Besides, in the present embodiment, the first base material, the printing layer, and the second base material may be laminated in this order, and if necessary, another layer may be sandwiched therebetween. For example, an appropriate adhesive layer, deposition layer, or barrier layer may be sandwiched between respective layers.

As the laminate processing method, for example, a laminating method, or a dry laminating method by which an adhesive is applied to the surface of the printed matter and then a film-like polymer is laminated can be utilized. In addition, the dry laminating method is a method of applying an adhesive such as a urethane-based adhesive and an isocyanate-based adhesive to the surface of the layer of the white ink composition, and then laminating a film-like polymer using a known dry laminating machine. Polyethylene, non-stretched polypropylene, or the like can be used as a resin for film used in the dry laminating method. Such a laminated product can be made into a bag and fill contents. The above-described resin film used at this time is not particularly limited. By way of an example, the resin film includes polyester films such as polyethylene terephthalate (PET), polylactic acid, and polycaprolactone, various plastic films for printing such as nylon and vinylon, a film laminated with a barrier layer that is metal-deposited and coated with a barrier resin on these various plastic films for printing, and the like.

As described above, according to the present embodiment, when the ink composition is applied to the base material and cured, and then a laminated body (a laminated body comprising a first base material, a printing layer, and a second base material), on which a film is laminated via an adhesive, is produced, the ink composition is excellent in lamination strength.

In the obtained laminated body, a glass transition temperature of the printing layer (a resin composition constituting the printing layer) is not particularly limited. By way of an example, the glass transition temperature of the printing layer is preferably -10°C or higher, and further preferably 0°C or higher. Moreover, the glass transition temperature is preferably 30°C or lower, and further preferably 25°C or lower. When the glass transition temperature of the printing layer is within the above-described ranges, stickiness of the coating film is reduced. The stickiness leads to tackiness of the surface, and suppression of the stickiness leads to sticking to a rotating roll (adherence to a guide roll) during a secondary processing (laminate processing) of the printed matter, suppression of wrinkles, suppression of "stiffness", etc.

One embodiment of the present invention has been described above. The present invention is not particularly limited to the above-described embodiment. Besides, the above-described embodiment mainly describes an invention having the following configurations.
(1) An active energy ray-curable offset printing ink composition, comprising a colorant, a urethane acrylate resin having an acid value of 3 mgKOH/g or less, a metal chelating agent, and a polyfunctional photopolymerizable compound, wherein a content of the metal chelating agent is 0.1 to 10%, and wherein the active energy ray-curable offset printing ink composition is configured for forming a printing layer in a laminated body comprising a first base material, the printing layer provided on the first base material, and a second base material provided on the printing layer.

According to such a configuration, when the active energy ray-curable offset printing ink composition is applied to the base material and cured, and then a laminated body, on which a film is laminated via an adhesive, is produced, it is excellent in lamination strength.

(2) The active energy ray-curable offset printing ink composition of (1), further comprising an extender pigment.

According to such a configuration, viscoelasticity and fluidity of the active energy ray-curable offset printing ink composition are easily adjusted, and misting is easily prevented.

(3) The active energy ray-curable offset printing ink composition of (1) or (2), wherein the polyfunctional photopolymerizable compound comprises a polyfunctional (meth)acrylate having an alkylene oxide-derived skeleton.

According to such a configuration, the active energy ray-curable offset printing ink composition has increased adhesiveness to the base material and increased lamination strengths.

(4) The active energy ray-curable offset printing ink composition of any one of (1) to (3), wherein the urethane acrylate resin includes an aliphatic urethane acrylate resin.

According to such a configuration, the active energy ray-curable offset printing ink composition has increased adhesiveness to the base material and increased lamination strengths.

(5) The active energy ray-curable offset printing ink composition of (3), wherein the polyfunctional (meth)acrylate having an alkylene oxide-derived skeleton includes an alkylene oxide-modified trimethylolpropane triacrylate containing 3 to 30 alkylene oxide units in a molecule.

According to such a configuration, the active energy ray-curable offset printing ink composition has increased adhesiveness to the base material and increased lamination strengths.

(6) A laminated body comprising a printing layer to which the above-described active energy ray-curable offset printing ink composition of any one of (1) to (5) is applied, wherein the printing layer is provided on a first base material, and wherein a second base material is provided on the printing layer.

According to such a configuration, the laminated body has excellent lamination strengths.

### EXAMPLE

Hereinafter, the present invention will be described in more detail with reference to Examples. The present invention is not limited to these Examples. Besides, unless otherwise specified, "%" means "% by mass", and "part" means "part by mass".

### (Examples 1 to 22, Comparative examples 1 to 7)

Based on the formulations shown in Table 1, active energy ray-curable offset printing ink compositions of Examples 1-22 and Comparative examples 1-7 were prepared. In preparing the ink composition, raw materials were mixed and kneaded in a three-roll mill. Besides, as shown in Tables 3 and 4, Examples 21 and 22 are examples using a plurality of inks.

**Table 1**

| | Example | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| Ink No. | W1 | W2 | W3 | W4 | W5 | W6 | W7 | W8 | W9 | W10 | W11 | C1 | C2 |
| Pigment | | | | | | | | | | | | | |
| Titanium oxide | 32 | 32 | 32 | 32 | 32 | 32 | 32 | 32 | 32 | 32 | 32 | | |
| Phthalocyanine (PB15:3) | | | | | | | | | | | | 23 | 23 |
| Carbon black | | | | | | | | | | | | | |
| Aliphatic urethane acrylate resin 1 | 40 | 40 | 40 | | 40 | 40 | 40 | 40 | 40 | 40 | 40 | 40 | 40 |
| Aliphatic urethane acrylate resin 2 | | | | 40 | | | | | | | | | |
| Aliphatic urethane acrylate resin 3 | | | | | | | | | | | | | |
| Aliphatic urethane acrylate resin 4 | | | | | | | | | | | | | |
| Calcium carbonate T-DD | 5 | 5 | 5 | 5 | 5 | 5 | 5 | 5 | 5 | 5 | 5 | 5 | 5 |
| Silica R972 | 3 | 3 | 3 | 3 | 3 | 3 | 3 | 3 | 3 | 3 | 3 | 2 | 2 |
| 3EO-modified TMPTA | | | | | | | | | | | | | |
| 6EO-modified TMPTA | 19 | 19.5 | 15 | 19 | | | | 9.5 | 9.5 | | 19 | 29 | 29.5 |
| 9EO-modified TMPTA | | | | | 19 | | | 9.5 | | 9.5 | | | |
| 15EO-modified TMPTA | | | | | | 19 | | | 9.5 | | | | |
| 6PO-modified TMPTA | | | | | | | 19 | | | 9.5 | | | |
| Aluminum chelate ALCH | 1 | 0.5 | 5 | 1 | 1 | 1 | 1 | 1 | 1 | 1 | | 1 | 0.5 |
| Metal chelate TC-100 other than aluminum chelate | | | | | | | | | | | 1 | | |
| Total | 100 | 100 | 100 | 100 | 100 | 100 | 100 | 100 | 100 | 100 | 100 | 100 | 100 |
| Viscosity (Pa·s) | 6 | 6 | 6 | 6 | 6 | 8 | 7 | 7 | 6 | 5 | 6 | 18 | 18 |

| | Example | | | | | | | Comparative example | | | | | |
|---|---|---|---|---|---|---|---|---|---|---|---|---|---|
| | 14 | 15 | 16 | 17 | 18 | 19 | 20 | 1 | 2 | 3 | 4 | 5 | 6 |
| Ink No. | C3 | C4 | C5 | C6 | W17 | C9 | W15 | W12 | C7 | W13 | C8 | W14 | W16 |
| Pigment | | | | | | | | | | | | | |
| Titanium oxide | | | | | 32 | | 32 | 32 | | 32 | | 32 | 32 |
| Phthalocyanine (PB15:3) | 23 | 23 | 23 | 23 | | 23 | | | 23 | | 23 | | |
| Carbon black | | | | | | | | | | | | | |
| Aliphatic urethane acrylate resin 1 | 40 | | 40 | 40 | | | 40 | 40 | 40 | | | 40 | 60 |
| Aliphatic urethane acrylate resin 2 | | 40 | | | 40 | 40 | | | | | | | |
| Aliphatic urethane acrylate resin 3 | | | | | | | | | | | | | |
| Aliphatic urethane acrylate resin 4 | | | | | | | | | | 40 | 40 | | |
| Calcium carbonate T-DD | 5 | 5 | 5 | 5 | 5 | 5 | 5 | 5 | 5 | 5 | 5 | 5 | 5 |
| Silica R972 | 2 | 2 | 2 | 2 | 3 | 2 | 2 | 3 | 2 | 3 | 2 | 2 | 2 |
| 3EO-modified TMPTA | | | | | | | 20 | | | | | | |
| 6EO-modified TMPTA | 25 | 29 | 14.5 | 29 | 19 | 29 | | 20 | 30 | 19 | 29 | 20.95 | |
| 9EO-modified TMPTA | | | | | | | | | | | | | |
| 15EO-modified TMPTA | | | 14.5 | | | | | | | | | | |
| 6PO-modified TMPTA | | | | | | | | | | | | | |
| Aluminum chelate ALCH | 5 | 1 | 1 | | 1 | 1 | 1 | | | 1 | 1 | 0.05 | 1 |
| Metal chelate TC-100 other than aluminum chelate | | | | 1 | | | | | | | | | |
| Total | 100 | 100 | 100 | 100 | 100 | 100 | 100 | 100 | 100 | 100 | 100 | 100 | 100 |
| Viscosity (Pa·s) | 18 | 18 | 18 | 18 | 6 | 18 | 6 | 6 | 18 | 6 | 18 | 6 | 6 |

### Raw materials used are as follows.

### (Colorant)

Titanium oxide: CR-80 manufactured by ISHIHARA SANGYO KAISHA, LTD.
Phthalocyanine: PB15:3 LlONOL BLUE FG-7330 manufactured by TOYOCOLOR CO., LTD.

### (Urethane acrylate resin)

Properties of urethane acrylate resins are shown in Table 2 below.

**Table 2**

| | Number of functional groups | Average molecular weight (Mw) | Cured product Tg (°C) | Acid value (mgKOH/g) |
|---|---|---|---|---|
| Aliphatic urethane acrylate 1 | 2 | 2000 | 18 | 1.5 |
| Aliphatic urethane acrylate 2 | 2 | 2500 | 14 | 1.0 |
| Aliphatic urethane acrylate 3 | 2 | 500 | 14 | 1.0 |
| Aliphatic urethane acrylate 4 | 2 | 2000 | 15 | 5.0 |

### (Metal chelating agent)

### Aluminum chelate

· ALCH (aluminum ethyl acetoacetate diisopropylate) manufactured by Kawaken Fine Chemicals Co., Ltd.
Chelate other than aluminum chelate
· ORGATIX TC-100 manufactured by Matsumoto Fine Chemical Co., Ltd.

### (Polyfunctional photopolymerizable compound)

Polyfunctional (meth)acrylate having alkylene oxide-derived skeleton
3EO-TMPTA: TMPTA having 3 EO units in one molecule
6EO-TMPTA: TMPTA M-3160 having 6 EO units in one molecule
15EO-TMPTA: TMPTA M3150 having 15 EO units in one molecule

### (Extender pigment)

Calcium carbonate (T-DD, manufactured by SHIRAISHI CALCIUM KAISHA, LTD.)
Silica (AEROSIL R972, manufactured by NIPPON AEROSIL CO., LTD.)

### (Method of manufacturing laminated body)

0.1 cc of ink compositions were transferred onto a base material film (PET film, S46 (12 µm), manufactured by POLYPLEX CORPORATION LIMITED) and a base material film (OPP film, P-2161 (20 µm), manufactured by TOYOBO CO., LTD.), respectively, with a simple drawdown machine (Rl tester, manufactured by Houei Co., Ltd.) and irradiated with electron beams at a conveyor speed of 10 m/min using an electron beam curing device (EC90, manufactured by IWASAKI ELECTRIC CO., LTD.) (accelerating voltage: 90 kV, irradiation dose: 30 kGy) to obtain a printed matter having a cured ink film. An adhesive (TAKELAC A969V/TAKENATE A-5, coating amount: 3.0 g/m²) was applied, and a CPP film (L-4104, manufactured by TOYOBO CO., LTD., also referred to as a sealant, see Tables 2 and 3) was laminated with a dry laminator to obtain a laminated product. The laminated product was then held at 40°C for 3 days to obtain a film laminated body of sealant/adhesive/cured ink film/base material.

A lamination strength (peel strength) and a seal strength of each laminated body obtained were measured by the following methods. The results are shown in Table 3 for peel strength and Table 4 for seal strength.

### (Lamination strength (peel strength))

An adhesive (TAKELAC A969V/TAKENATE A-5) was applied to a printed surface so as to have 3 g/m² as a solid content, and a film was laminated using the dry laminator to obtain a laminated body. The laminated body was then held at 40°C for 3 days. This laminated body was cut into a sample piece having a width of 15 mm, and a T-shaped peel strength was measured using an exfoliation tester manufactured by YASUDA SEIKI SEISAKUSHO, LTD. The evaluation result is an actual value of strength (N/15 mm). Besides, the alphabets in the tables indicate a position of a peeling interface or the like. B is peeling between a base and an ink, S is peeling between an ink and a sealant, F is film breakage, and C is ink coagulation.

### <Method of creating printed matter>

An indigo ink was developed on a base material using an RI tester. 0.1 cc of ink was placed on a first rubber roller using a pipette. The ink was kneaded between a first roller and a second roller, thereby spreading the ink evenly over the two rollers. At this time, an amount of the ink on each of the two rollers was estimated to be approximately 0.05 cc. The second roller was rotated to transfer the ink to the base material, placing the ink on the base material. At this time, assuming that an ink transfer rate be 50% although it varies depending on physical properties of the ink and physical properties of the base material (smoothness, surface tension), an amount of the ink on the base material was assumed to be 0.025 cc. Here, a concentration of the base material was measured using a spectrophotometer. Besides, there is no unit for concentration, and the larger the absolute value of the numeral is, the deeper the color appears to be. If the measured concentration did not reach a target concentration value, an amount of the ink on the base material was insufficient, so the amount was increased. After this printed matter was subjected to EB curing, it was laminated to evaluate the printed matter having a monochromatic indigo. A white ink was also developed in the same manner, and a printed matter of the white ink alone was evaluated. In the case of white ink, a value quantified as a contrast ratio, which is a hiding power of a colorimeter, was used from the measurement items. In a case of overlaying, a white ink (developed with a pipette amount that reached an amount of 60% with a monochromatic white) was placed on top of the indigo ink development as described above. Both the indigo and white inks were WET-on-WET. Besides, a film thickness of each ink was changed in advance so as to have indigo; 1.80, and a white contrast ratio: 60% or more, and a concentration and a contrast ratio were measured with a spectrophotometer X-Rite eXact (Advance) (manufactured by X-Rite, Incorporated). Then, printing was performed with a film thickness of indigo; 1.80, and a white contrast ratio: 60% or more. In the case of overlaying, a method was adopted in which, after printing with an indigo ink, a white ink was printed in a wet state, and then electron beam curing was performed.

### (Seal strength test)

The above-described laminated body was cut into a piece with a width of 15 mm and a length of 100 mm, folded up into a width of 15 mm and a length of 50 mm with the sealant film side being inside, and heat-sealed so that a portion of 25 mm from the end is centered with an impulse sealer (manufactured by FUJIIMPULSE CO., LTD., seal width: 10 mm) to produce a test piece for seal strength test. The test piece was mounted on the exfoliation tester manufactured by YASUDA SEIKI SEISAKUSHO, LTD., and strength (seal strength) when it was broken at a peeling speed of 300 mm/min was measured. The evaluation result is an actual value of strength (N/15 mm). Besides, the alphabets in the tables indicate a position of an peeling interface or the like. B is peeling between a base and an ink, S is peeling between an ink and a sealant, F is film breakage, and C is ink coagulation.

**Table 3**

| Adhesive | TAKELAC A969V/TAKENATE A-5 | | | | | | | | | | | | | | |
|---|---|---|---|---|---|---|---|---|---|---|---|---|---|---|---|
| Sealant layer | CPP | | | | | | | | | | | | | | |
| Base material | Example | | | | | | | | | | | | | | |
| | 1 | 2 | 3 | 4 | 5 | 6 | 7 | 8 | 9 | 10 | 11 | 12 | 13 | 14 | 15 |
| Primary color | W1 | W2 | W3 | W4 | W5 | W6 | W7 | W8 | W9 | W10 | W11 | C1 | C2 | C3 | C4 |
| Secondary color | | | | | | | | | | | | | | | |
| P-2161 | | | | | | | | | | | | | | | |
| Color part | 2.5 F | 2.4 F | 2.5 F | 2.5 F | 2.4 F | 2.4 F | 2.7 F | 3.0 F | 3.1 F | 2.4 F | 2.5 F | 3.1 F | 2.6 F | 2.1 F | 2.5 F |
| S46PET film (Manufactured by POLYPLEX CORPORATION LIMITED) | | | | | | | | | | | | | | | |
| Color part | 3.1 F | 3.2 F | 2.8 F | 2.0 F | 2.8 F | 2.0 F | 2.6 F | 3.1 F | 3.1 F | 2.8 F | 2.1 F | 2.5 F | 2.6 F | 2.8 F | 3.1 F |

| Base material | Example | | | | | | | Comparative example | | | | | | | |
|---|---|---|---|---|---|---|---|---|---|---|---|---|---|---|---|
| | 16 | 17 | 18 | 19 | 20 | 21 | 22 | 1 | 2 | 3 | 4 | 5 | 6 | 7 | |
| Primary color | C5 | C6 | W17 | C9 | W15 | C1 | C1 | W12 | C7 | W13 | C8 | W14 | W15 | W16 | |
| Secondary color | | | | | | W1 | W2 | | | | | | | | |
| P-2161 | | | | | | | | | | | | | | | |
| Color part | 2.5 F | 2.5 F | 2.5 F | 2.5 F | 1.0 F | 2.4 F | 2.1 F | 0.8 B | 0.6 B | 0.6 B | 1.1 B | 0.4 B | 0.5 B | 0.5 B | |
| S46PET film (Manufactured by POLYPLEX CORPORATION LIMITED) | | | | | | | | | | | | | | | |
| Color part | 3.1 F | 3.0 F | 2.0 F | 3.1 F | 1.2F | 2.8 F | 3.0 F | 0.5 B | 0.5 B | \| 0.6 B | \| 0.6 B | 0.6 B | 0.6 B | \| 0.6 B | |

**Table 4**

| Adhesive | TAKELAC A969V/TAKENATE A-5 | | | | | | | | | | | | | | |
|---|---|---|---|---|---|---|---|---|---|---|---|---|---|---|---|
| Sealant layer | CPP | | | | | | | | | | | | | | |
| Base material | Example | | | | | | | | | | | | | | |
| | 1 | 2 | 3 | 4 | 5 | 6 | 7 | 8 | 9 | 10 | 11 | 12 | 13 | 14 | 15 |
| Primary color | W1 | W2 | W3 | W4 | W5 | W6 | W7 | W8 | W9 | W10 | W11 | C1 | C2 | C3 | C4 |
| Secondary color | | | | | | | | | | | | | | | |
| P-2161 | | | | | | | | | | | | | | | |
| Color part | 35.0 F | 38.0 F | 34.0 F | 35.0 F | 28.0 F | 38.0 F | 33.0 F | 34.0 F | 24.0 F | 23.0 F | 32.0 F | 22.0 F | 35.0 F | 32.0 F | 31.0 F |
| S46PET film (Manufactured by POLYPLEX CORPORATION LIMITED) | | | | | | | | | | | | | | | |
| Color part | 25.0 F | 28.0 F | 33.0 F | 31.0 F | 29.0 F | 24.0 F | 31.0 F | 31.0 F | 23.0 F | 30.0 F | 35.0 F | 28.0 F | 23.0 F | 30.0 F | 30.0 F |

| Base material | Example | | | | | | | Comparative example | | | | | | | |
|---|---|---|---|---|---|---|---|---|---|---|---|---|---|---|---|
| | 16 | 17 | 18 | 19 | 20 | 21 | 22 | 1 | 2 | 3 | 4 | 5 | 6 | 7 | |
| Primary color | C5 | C6 | W17 | C9 | W15 | C1 | C1 | W12 | C7 | W13 | C8 | W14 | W15 | W16 | |
| Secondary color | | | | | | W1 | W2 | | | | | | | | |
| P-2161 | | | | | | | | | | | | | | | |
| Color part | 22.0 F | 35.0 F | 35.0 F | 31.0 F | 10.0 F | 32.0 F | 32.0 F | 0.6 B | 1.0 B | 1.0 B | 1.0 B | 1.4 B | 1.4 B | 1.0 B | |
| S46PET film (Manufactured by POLYPLEX CORPORATION LIMITED) | | | | | | | | | | | | | | | |
| Color part | 27.0 F | 21.0 F | 31.0 F | 30.0 F | 12.0 F | 30.0 F | 30.0 F | 0.6 B | 1.5 B | 1.0 B | 1.3 B | 1.3 B | 1.3 B | 1.4 B | |

As shown in Tables 3 and 4, when the ink compositions of Examples 1 to 22 of the present invention were used, lamination strength (peel strength) and seal strength were excellent.

## Claims

1. An active energy ray-curable offset printing ink composition, comprising a colorant, a urethane acrylate resin having an acid value of 3 mgKOH/g or less, a metal chelating agent, and a polyfunctional photopolymerizable compound,
wherein a content of the metal chelating agent is 0.1 to 10%, and
wherein the active energy ray-curable offset printing ink composition is configured for forming a printing layer in a laminated body comprising a first base material, the printing layer provided on the first base material, and a second base material provided on the printing layer.

2. The active energy ray-curable offset printing ink composition of claim 1, further comprising an extender pigment.

3. The active energy ray-curable offset printing ink composition of claim 1 or 2, wherein the polyfunctional photopolymerizable compound comprises a polyfunctional (meth)acrylate having an alkylene oxide-derived skeleton.

4. The active energy ray-curable offset printing ink composition of any one of claims 1 to 3, wherein the urethane acrylate resin includes an aliphatic urethane acrylate resin.

5. The active energy ray-curable offset printing ink composition of claim 3, wherein the polyfunctional (meth)acrylate having an alkylene oxide-derived skeleton includes an alkylene oxide-modified trimethylolpropane triacrylate containing 3 to 30 alkylene oxide units in a molecule.

6. A laminated body comprising a printing layer to which the active energy ray-curable offset printing ink composition of any one of claims 1 to 5 is applied,
wherein the printing layer is provided on a first base material, and
wherein a second base material is provided on the printing layer.
